Europäisches Patentamt

European Patent Office

Office européen des brevets

(11) Publication number: **0 125 784**
**B1**

## EUROPEAN PATENT SPECIFICATION

(45) Date of publication of patent specification: **01.04.87**

(51) Int. Cl.⁴: **A 61 C 17/02, A 61 C 1/07**

(21) Application number: **84302439.9**

(22) Date of filing: **10.04.84**

(54) Ultrasonic endodontic dental apparatus.

(30) Priority: **15.04.83 US 485421**

(43) Date of publication of application:
**21.11.84 Bulletin 84/47**

(45) Publication of the grant of the patent:
**01.04.87 Bulletin 87/14**

(84) Designated Contracting States:
**AT BE CH DE FR GB IT LI LU NL SE**

(56) References cited:
**DE-A-1 916 507**
**DE-A-2 337 143**
**DE-A-3 105 424**
**DE-C-1 616 003**
**GB-A- 790 277**
**US-A-3 924 335**
**US-A-3 930 173**
**US-A-4 295 827**
**US-E- 30 536**

(73) Proprietor: **Cooper Lasersonics Inc.**
**3420 Central Expressway**
**Santa Clara California 95051 (US)**

(72) Inventor: **Warrin, George E.**
**914 Madison Place**
**North Merrick New York 11566 (US)**
Inventor: **Perdreaux, Rene J.**
**1191 East 34th Street**
**Brooklyn New York 11210 (US)**

(74) Representative: **Pratt, David Martin et al**
**Brookes & Martin High Holborn House 52/54**
**High Holborn**
**London. WC1V 6SE (GB)**

Courier Press, Leamington Spa, England.

## Description

This invention relates to ultrasonic endodontic dental apparatus, and more particularly to an improved endodontic tool holder and root canal irrigating apparatus adapted to be used with an ultrasonic dental handpiece for debriding root canals, and for directing fluid solutions, including medicaments, along the endodontic instrument for irrigating and treating the root canal during use of the instrument.

Ultrasonic endodontic dental tools employed as cutting or cleaning tools in dental procedures are known in which a liquid, conventionally water, flows through the ultrasonically-driven head, or handpiece, to cool the handpiece and act to isolate, at least partially, the housing from the high frequency vibrations. Such cooling water may flow through the handpiece, and be discharged from the tool supporting end, in the direction of the tool tip, to irrigate and cool the work area. One such ultrasonic device is disclosed, for example, in U.S.—E—30,536, which describes an ultrasonic hand-held cleaning device having a housing enclosing a casing, an energising winding about the casing, and a fluid conduit attached to the interior of the casing. As sleeve is insertably mounted into the end of the casing, and acts to support a connecting body at a spaced distance within the sleeve so as to form an annular space in fluid communication with the casing. A vibrator is attached at the casing end to the connecting body and is therefore located in the casing opposite the engergising winding. A cleaning tool is attached to the other end of the connecting body. In one version, fluid moving through the annular space is sprayed out of an annular nozzle around the tool which is itself vibrating ultrasonically as a result of reverberatory vibrations induced by the vibrator. In a second version, the connecting body has a ring at its nodal point, the sleeve being cut out to accommodate the ring, and having two longitudinal slots for the passage of fluid. A tubular insert for controlling the space between the connecting body and the sleeve at the nozzle is supported by the sleeve.

It has also been proposed to use ultrasonically endodontic files, in the performance of root canal therapy, by supporting the file for axial, or longitudinal ultrasonic vibrations, and by mounting the file in a resilient clamping means and ultrasonically vibrating the file in a transverse, wave-like motion to enhance the debriding action. It is also known to provide an irrigation fluid directed from an ultrasonically-vibrating endodontic file, longitudinally of the axis of the file, to enable irrigation of the root canal while the debriding action is proceeding. However, the known ultrasonically-vibrated endodontic file supports and root canal irrigation devices have not generally been capable of selectively and controllable applying fluid medication, or other irrigation liquid other than the cooling liquid circulated through the dental handpiece. Moreover, effective use of the cooling and vibration isolating liquid in the handpiece requires a substantially continuous flow of cooling liquid, which may be substantially greater than the flow rate necessary (or desired) in irrigating a root canal.

The aim of the invention is to provide an improved ultrasonically-vibrated endodontic instrument which overcomes the above and other defects of the prior art.

The present invention provides a dispensing insert assembly for an ultrasonic endodontic dental apparatus including a handpiece having an elongate hollow housing, and a coil mounted in the housing and adapted to be connected to an external energy source for establishing an alternating electromagnetic field within the housing, the housing having a cooling liquid fluid inlet at one end and being open at its other end, and the other end of the housing being adapted to removably receive the insert assembly, the assembly comprising an elongate hollow body having one end adapted to be removably mounted in said other end of the housing with said one end of the hollow body in fluid communication with the interior of the housing whereby cooling fluid admitted into the housing can flow into the hollow body, a tool support assembly telescopically received within the hollow body, the tool support assembly including an elongate shank having vibratable means rigidly mounted at one end thereof, the vibratable means projecting from said one end of the hollow body into a position in which it can be vibrated by the electromagnetic field when the hollow body is mounted in the housing, the other end of the shank projecting outwardly from the hollow body and terminating in mounting means for supporting an endodontic instrument, characterised in that sealing means is provided between the hollow body and the shank, a cooling fluid outlet is provided in the hollow body between the sealing means and said one end of the hollow body, the outlet providing a flow path for cooling fluid from the handpiece, the shank having a fluid flow passage extending longitudinally therethrough from the mounting means and terminating at a location within the hollow body, and an irrigation fluid inlet is provided for admitting irrigation fluid into the fluid flow passage to be discharged from said mounting means in a direction substantially parallel to an endodontic instrument mounted in the mounting means.

This dispensing insert assembly can be inserted into, and used with, known prior art ultrasonic handpieces, whereby known ultrasonic dental handpieces can be adapted for endodontic use. Moreover, this insert assembly permits selective discharging of irrigation fluid along the axis of endodontic instrument such as a root canal file to irrigate a root canal during use.

The mounting means of the insert assembly can rigidly support an endodontic instrument (such as a root canal file) in a position in which transverse wave ultrasonic vibrations can be imparted efficiently thereto.

Advantageously, the irrigation fluid inlet comprises a radially-extending bore in the shank, and an inlet opening in the hollow body, the sealing means providing a sealed flow path between the inlet opening and the radially-extending bore. Preferably, the sealing means comprises a pair of O-ring seals disposed one on each side of the inlet opening in the hollow body and radially-extending bore.

The tool support assembly may be provided with means engageable with the hollow body to prevent relative rotation therebetween.

Advantageously, the mounting means comprises an enlarged head rigidly mounted on said other end of the shank, a first bore extending through the head substantially in alignment with the fluid flow passage in the shank, a second bore extending into the head and intersecting the first bore, the second bore being adapted to receive the shank end of an endodontic instrument and having a diameter larger than that of the endodontic instrument, and a threaded fastener for rigidly clamping the endodontic instrument in the second bore. Preferably, the diameter of each of the first and second bores in the head is larger than that of the endodontic instrument to be supported, whereby irrigation fluid can flow from the head axially along the endodontic instrument.

Conveniently, the assembly further comprises a conduit connected to the outlet for conducting cooling water from the handpiece.

The invention also provides ultrasonic endodontic dental apparatus comprising a handpiece having an elongate hollow housing, a coil mounted in the housing and adapted to be connected to an external energy source for establishing an alternating electromagnetic field within the housing, the housing having a cooling fluid inlet at one end and being open at the other end, and a dispensing insert assembly removably mounted within said other end of the housing, wherein the dispensing insert assembly is as defined above.

In a preferred embodiment, the apparatus further comprises dispensing means including a closed chamber for containing irrigation fluid, a passage connecting the closed chamber to the irrigation fluid inlet, a selectively-operable valve in the passage for controlling the flow therethrough, and means for directing pressurised air into the closed chamber to cause irrigation fluid contained therein to flow through the passage when the valve is open. The dispensing means is operable to provide a controlled flow of irrigation fluid (which may contain medicaments or the like), the use of which may not be desired on a continuous or uncontrolled basis. Moreover, even when water or other inert irrigation fluid is employed, it is desirable to be able both to control the flow rate during irrigation, and to stop the flow of irrigation fluid during portions of the procedure. This may be accomplished, in accordance with the present invention, by providing the apparatus with a multi-position, foot-actuated switch wherein, in a first, fully-raised (or unactuated) position, power to the coil is off, and the flow of cooling fluid to the handpiece and irrigation fluid from the dispensing means are off; in a second, or intermediate position, the coil is energised, cooling fluid is circulated through the handpiece, and the dispensing means is not actuated so that no irrigation fluid flows to the apparatus; and, in a third fully-depressed position, power is supplied to the coil, cooling fluid is supplied to the handpiece, and the dispensing means is actuated to provide a controlled flow of irrigation fluid through the dispensing insert assembly for discharge along the axis of the endodontic instrument.

The selectively-operable valve may be a pinch valve, and is effective to control accurately the rate of flow of irrigation fluid from the dispensing means to the apparatus.

Upon completion of the endodontic procedure, the dispensing insert assembly can be simply removed from the dental handpiece, and another insert assembly (such as a cleaning head) inserted to enable the handpiece to be used for other procedures, so that maximum utilisation of the ultrasonic equipment is achieved.

An ultrasonic endodontic dental apparatus incorporating a dispensing insert assembly constructed in accordance with the invention will now be described in detail, by way of example, with reference to the accompanying drawings, in which:—

Fig. 1 is a longitudinal sectional view of the apparatus;

Fig. 2 is a schematic view of the apparatus and an associated control system; and

Fig. 3 is a sectional view of an irrigation fluid dispensing means used with the apparatus.

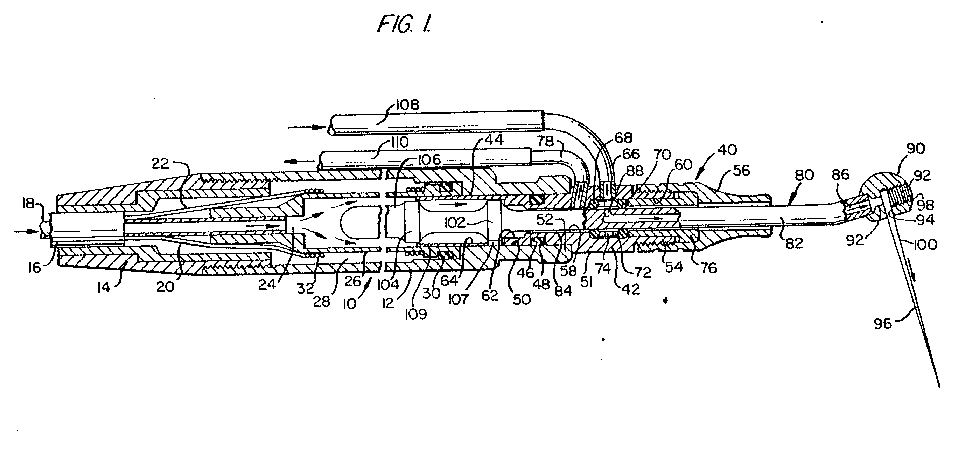

Ultrasonic cleaning instruments are well-known and widely used in the dental art, and numerous commercial devices are available for accomplishing various procedures and to satisfy the desires or preferences of the individual. The present invention is particularly well adapted for, but not limited to use with, the ultrasonic dental cleaning device of the type disclosed and described in the above-mentioned reissue patent, which device incorporates means for flowing a liquid through the handpiece, both to cool the electrically-excited ultrasonic device, and to isolate the vibrating components from the external housing normally held in the hand in the manner of a pencil during use by the dentist. This cooling liquid, typically water, flows through the handpiece, and is discharged from the end of the device in the direction of the operative tip of the instrument. While operation of the ultrasonic cleaning device is described in US—E—30,536, the basic structure will be briefly described here to facilitate understanding of the present invention. Also, while the entire assembly illustrated in Fig. 1 is sometimes referred to generally as a handpiece, this term is used herein to refer only to the rigid housing and electrical components at the rear section of the instrument, whereas the removable portion at the front or working end of the apparatus will be referred to as an insert assembly, or a dispensing insert assembly.

Referring now to the drawings, Fig. 1 shows an ultrasonic handpiece, indicated generally by the reference number 10. The handpiece 10 includes an outer, substantially-cylindrical tubular housing 12, which is closed at its rear end by a threaded end cap 14. A compound cable assembly 16 is mounted in, and extends through, the end cap 14. The cable assembly 16 contains a central, flexible hose 18, and a pair of electrical conductors (or wires) 20 and 22.

The flexible hose 18 extends into, and forms a fluid-tight seal with, an axial opening 24 in the end of an inner housing. The inner housing 26 is mounted coaxially within, and in inwardly spaced relation to, the inner surface of the outer housing 12 to define an annular space 28. An O-ring seal 30 on the front end of the inner housing 26 cooperates with the inner surface of the outer housing 12 to form a fluid-tight seal adjacent to the front end of the handpiece 10. The conductors 20 and 22 are connected to the windings of a coil, indicated generally by the reference numeral 32, wound on the outer surface of the inner housing 26 so that, when the conductors 20 and 22 are connected to a suitable external power source (not shown), a high-frequency alternating electromagnetic field is established. The front end of the outer housing 12 has a reduced diameter bore corresponding to the internal diameter of the inner housing 26, with the two surfaces being adapted to telescopically receive and support a cylindrical surface on a removable, dispensing insert assembly 40, with the insert assembly being retained by friction only, thereby permitting easy separation and replacement with another insert assembly.

Referring to the front, or operative end of the apparatus, that is to say the end at the right in Fig. 1, the removable, dispensing insert assembly 40 comprises an elongate rigid hollow body 42 having a central section 44 with a cylindrical outer surface whose diameter is substantially equal to that of the inner cylindrical surface of the inner housing member 26 and that of the front end of the outer housing member 12. An O-ring seal 46, which is mounted within an O-ring groove 48, frictionally engages the inner surface 50 of the outer housing 12 to provide a fluid-tight seal between the body 42 and the outer housing, and to retain the body resiliently within the outer housing. The central portion 51 of the body 42 is of enlarged diameter, and defines a shoulder 52 adapted to engage the front end of the outer housing 12, thereby to position the insert assembly 40 accurately within the handpiece 10. The front section 54 of the body 42 is externally threaded to engage and support an internally-threaded nut 56. A small diameter bore 58 extends axially through the body 42, and a counterbore 60 extends into the body from its front end to a position within the enlarged central portion 51. Also, first and second counterbores formed in the rear end of the body 42 provide first and second cylindrical surfaces 62 and 64.

A rigid tubular elbow member 66 has one end mounted in a radial bore in the enlarged central portion 51 of the body 42, the tubular member preferably being secured therein by brazing or welding to provide a rigid watertight seal. A pair of O-rings 68 and 70, which are mounted within the counterbore 60, retain an annular spacer sleeve 72; and radially-extending openings 74, which are formed in the spacer sleeve, permit the flow of liquid from the tubular member 66 through the spacer sleeve. A retaining sleeve 76 is telescopically received in the front end of the body 42 to position the O-rings 68 and 70 and the spacer sleeve 72, with the sleeve 76 being held in position by the threaded nut 56.

A second rigid curved tubular member 78 is secured, for example by brazing, in a second generally radially-extending bore in the enlarged central portion 51 of the body 42. The tubular member 78 provides fluid communciation with the small diameter bore section 58 to the rear of the O-ring seal 68. The purpose of the second tubular member 78 will be described more fully hereinbelow.

An elongate tool support assembly 80 is slidably supported withn the body 42. The tool support assembly 80 includes a rigid metal shank 82 having an external diameter which is slightly less than the diameter of the bore 58 to provide an annular fluid flow passage 84 therebetween. An axial bore 86 is formed in the outwardly-projecting end of the shank 82, the bore 86 terminating at a location between the O-rings 68 and 70. A radial bore 88 provides a fluid flow path from the tubular member 66 and the opening 74 in the spacer sleeve 72 to the bore 86. An enlarged rigid head 90 is rigidly mounted, for example by brazing or welding, on the distal end of the shank 82. A bore 92 extends through the rigid head 90 to communicate with the bore 86 in the shank 82. A radially-extending bore 94 is also formed in the head 90, the bore 94 extending transversely with respect to the bore 92 to receive the support butt end of a replaceable root canal file 96. A sealing and locking set screw (not shown), which is mounted in a threaded counterbore 98 in the head 90, is adapted to engage and firmly retain the butt end of the root canal file 96 seated in the head. The diameter of the bore 94 is larger than the diameter of the bore 92, so that fluid flowing through the shank 82 can flow around the end of the root canal file 96, and be discharged from the head 90 axially along the root canal file in the direction indicated by the arrow 100.

The tool support assembly 80 has a connecting body disposed within the rear end of the body 42, the connecting body including a pair of enlarged portions 102 and 104 each having a diameter slightly less than the diameter of the cylindrical surface 64. A key 107, which is integrally formed on the cylindrical connecting body portion 102 is disposed within an elongate slot formed in the wall of the body 42, thereby preventing rotation of the tool support assembly 80 within the body 42.

A body 106 of magnetostrictive material is rigidly mounted, for example by brazing or welding, on the rear end of the connecting body portion 104 of the tool support assembly 80; and is excited, in the longitudinal direction, by the high frequency field established by the coil 32, thereby imparting the desired longitudinal vibrations to the tool support assembly. These vibrations are transmitted, in the conventional manner, through the rigid metal shank 82, and imparted to the root canal file 96, in a direction substantially transversely of its longitudinal axis, to establish a standing, wave-like vibration pattern to the file, which is highly effective in debriding a root canal. At the same time, pressurised fluid can flow, via flexible tube 108 along the tubular member 66 into the bore 60 of the body 42. Being restricted by the O-rings 68 and 70, this fluid then flows through the radial bore 88 and the axial bore 86 to the vibrating head 90, where it is discharged along the surface of the root canal file 96.

Cooling water enters the handpiece 10 through the flexible tube 18. It then flows through the handpiece 10 within the inner housing 26, and over the surface of the body 106 of magnetostrictive material and the connecting body portions 102 and 104 to the annular passage 84. The O-ring 68 blocks flow of cooling water beyond this point, forcing it to flow out through the tubular member 78. A flexible tube 110 is connected to the tubular member 78 to provide an escape for the cooling water. Normally, cooling water would escape from the end of the insert assembly when the handpiece is used in connection with a cleaning tool or the like. Thus, the dispensing insert assembly 40 permits the flow of cooling water through the handpiece 10, while at the same time providing a flow path for an irrigation fluid, which flow path is completely isolated from that of the cooling water. The tube 110 can be led to, for example, a suitable drain or sump, since water from a conventional municipal water supply system is normally employed as the cooling water.

The rigid mounting structure provided for the root canal file 96 substantially reduces fatigue failures and fluid leaks, thereby ensuring efficient transfer of vibration energy to the working instrument.

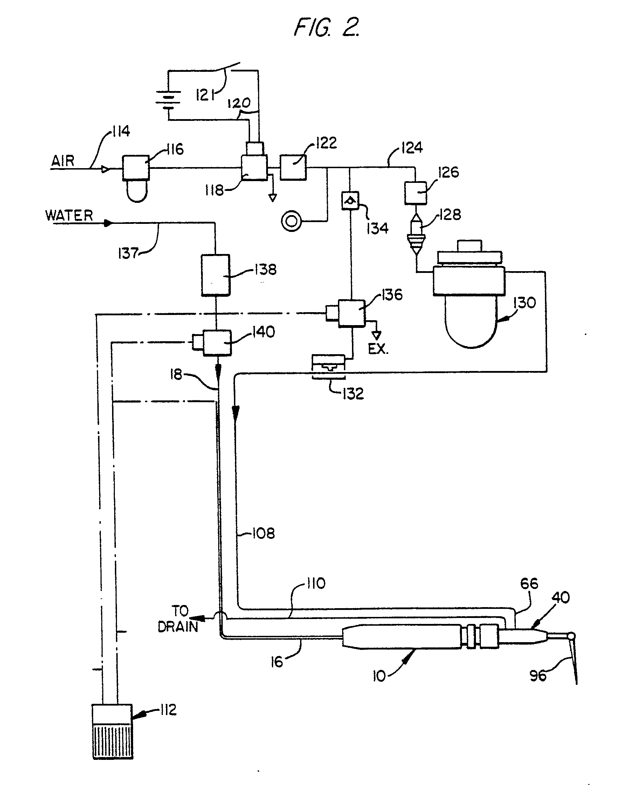

Referring now to Fig. 2, the ultrasonic endodontic apparatus previously described is schematically illustrated as connected in a control system including a three-position, foot-actuated control switch 112. The switch 112 is selectively operable to control the flow of cooling water and power to the handpiece 10, and to control the flow of irrigation fluid to the dispensing insert assembly 40. Pressurised air is supplied, via a line 114, from a suitable compressed air source such as conventional dental air supply compressor (not shown). The air from the line 114 passes intially through an inlet, or preliminary filter 116, and then through a main solenoid-actuated shut-off valve 118. The shut-off valve 118 is connected, via lines 120 and a main control switch 121, to a suitable power source.

From the shut-off valve 118, the air flows through a first pressure reducer 122, and then through a line 124 to a second pressure reducer 126 and a one-way check valve 128. It is then discharged into an irrigation fluid dispensing assembly 130. Air admitted into the dispensing assembly 130 pressurises the irrigation fluid, causing it to flow through the line (tube) 108 and the tubular member 66 to the dispensing insert assembly 40. Flow through the line 108 is controlled by an air-pressure-actuated, pinch-type, shut-off valve 132 connected to the line 124 via a one-way check valve 134 and a solenoid-actuated valve 136. The valve 136 is connected to contacts (not shown) within the foot-actuated switch 112 in such a manner that it is opened when the switch 112 is moved to its third (or fully-depressed) position. The pinch valve 132 is preferably a normally-closed, air-energised, diaphragm-actuated pinch valve, which is opened only when air pressure is admitted to the valve by opening the solenoid-actuated valve 136.

Cooling water is supplied to the handpiece 10 from a suitable source (not shown) via a line 137. The line 137 is connected to a pressure regulator 138 and a solenoid-actuated valve 140, which in turn is connected to the flexible tube 18. The solenoid-actuated valve 140 is connected to contacts (not shown) within the foot-actuated switch 112 in such a manner as to be energised when the switch 112 is depressed to its second (or intermediate) position. At the same time, power is supplied to the coil 32 via the conductors 20 and 22. Thus, when the switch 112 is in its first (or unactuated) position, the solenoid-actuated valves 140 and 136 are de-energised, so that water will now flow through the tube 18, and the pinch valve 132 will prevent the flow of irrigation fluid through the line 108. If the valve 118 is open, air flowing through the line 124 will be admitted in the irrigation fluid dispensing assembly 130, so that the dispenser remains pressurised. However, no fluid can be dispensed, since the pinch valve 132 is closed. When the switch 112 is depressed to its second position, power will be supplied to the coil 32 within the handpiece 10, and to the valve 140 to admit the flow of cooling water. As described above, the cooling water flows through the handpiece 10, and out through the line 110 into a suitable drain. Under these conditions, no irrigation fluid will flow through the line 108, but the dental file 96 will be excited by the ultrasonic vibrations of the apparatus in the manner described above. Upon movement of the switch 112 to its third (or fully depressed) position, power will continue to be supplied to the coil 32 and the valve 140, and will also be supplied to open the valve 136. Air pressure will then be applied to open the pinch valve 132, and to permit irrigation fluid to flow to the dispensing insert assembly 40.

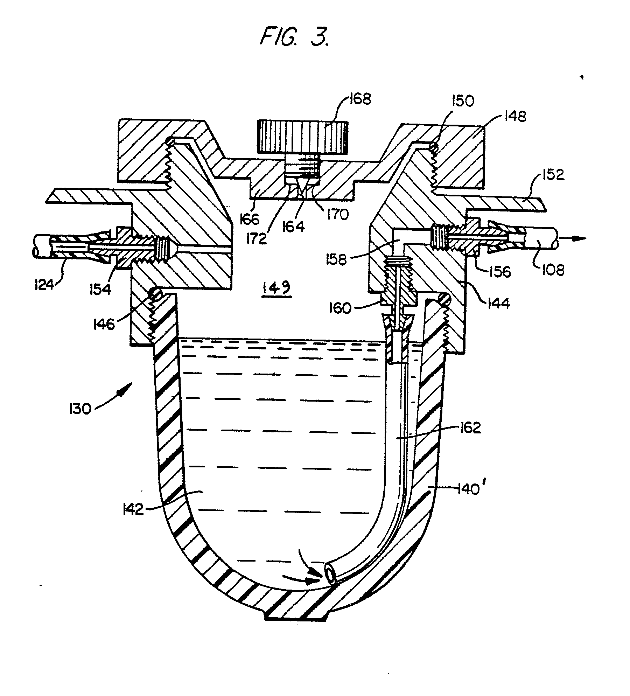

Referring now to Fig. 3, the irrigation fluid dispensing assembly 130 comprises a bowl 140' for containing a supply of irrigation fluid 142. The bowl 140' is preferably formed from a high-strength, transparent or translucent material, thereby permitting viewing of the contents. The material of the bowl 140' should also be capable of withstanding cleaning in conventional dental office sterilising apparatus. The bowl 40' has an open top threaded into, and supported by, a rigid housing 144. A resilient O-ring 146 provides a fluid-tight seal between the housing 144 and bowl 140'. A threaded cap (or closure member) 148 is mounted on the top of the housing 144. A removable O-ring 150 forms a seal between the cap 148 and the housing 144. A flange 152 is provided on the housing 144, the flange permitting the assembly 130 to be mounted on the top panel of a suitable cabinet structure (not shown) with the cap 148 projecting above the structure to facilitate filling of the bowl 140', and to provide access for the flow regulating means described more fully below. The bowl 140', the rigid housing 144 and the threaded cap 148 cooperate to form a closed chamber 149.

Air, under carefully-regulated pressure, is supplied via the line 124, to an inlet port 154 fitted into the housing 144, thereby pressurising the liquid 142 in the bowl 140'. The irrigation liquid delivery tube 108 is connected to an outlet port 156 fitted in the housing 144. The outlet port 156 communicates, via a drilled passage 158 in the housing 144, with a fitting 160 mounted within the housing 144. A short length of flexible tubing 162 is frictionally supported on the fitting 160, the tubing 162 extending downwardly to terminate in an open end adajcent to the bottom of the bowl 140'. Thus, it is seen that air pressure admitted through the line 124 will pressurise the internal chamber of the dispensing assembly 130, tending to cause the irrigation fluid 142 to flow out through the tube 162 into the irrigation supply tube 108, this flow being controlled by the pinch valve 132.

The maximum pressure within the irrigation dispensing assembly is limited by the second pressure reducer 126; with this maximum pressure normally being maintained relatively low to avoid possible discomfort to the patient, and to avoid excessive spray or splash back when the liquid is discharged along the root canal file 96. Flow rates below the maximum determined by the pressure reducer 126 may be regulated by a flow regulator provided in the cap 148. This flow regulator comprises a bleed-off outlet 164 formed in a recessed centre panel portion 166 of the cap 148. A flow control adjuster 168 is threadably mounted in a threaded counterbore 170 in the cap 148, the flow control adjuster having a needle valve tip 172 projecting· into the bleed-off outlet 164. Thus, a portion of the air admitted into the irrigation dispensing assembly chamber can be bled off, thereby to reduce the pressure in the chamber, and consequently to reduce the flow rate of irrigation fluid 142 through the tube 108.

Preferably, the flow control adjustment includes a pressure-relief valve (not shown) either in the bleed-off outlet 164 or in the needle valve tip 172 to prevent complete sealing of the bleed-off outlet. This safety feature ensures that air pressure in the chamber will be bled off when the system is shut down, thereby avoiding the possibility of the cap 148 or the bowl 140' being removed while the system is pressurised.

Experiments have determined that a maximum pressure within the irrigating fluid supply chamber of about 55 to 69 kilopascals (8 to 10 psi) is adequate, and that a preferred pressure may be within the range of about 34 to 55 kilopascals (5 to 8 psi). Since the flow rates through the small diameter tubing and channels of the entire system are inherently low, only a relatively small volume of air needs to be bled off through the outlet 164 to reduce the maximum air pressure within the chamber to the desired level. Thus, excess energy is not wasted by bleeding off compressed air, and the flow rate of bleed-off air is sufficiently low as to avoid objectionable noise. By mounting the flow control adjuster 168 within the recessed panel portion 166 of the cap 148, it is readily accessible, but is protected against inadvertent adjustment.

The irrigation fluid dispensing apparatus described above permits controlled dispensing of relatively low volumes of low-pressure irrigation as desired by the operating dentist. Since the liquid is used only for irrigation purposes, and only as required, medications, sterilising solutions and the like can be included in the irrigation liquid, so that the dentist does not have to interrupt the debriding procedure for the application of medicaments or for irrigating the root canal.

It will be apparent that various modifications may be made to the apparatus described above. For example, the dispensing insert assembly 40 may be adapted for mounting on various commercially-known ultrasonic handpieces, without regard to whether or not cooling water is employed in each handpiece.

**Claims**

1. A dispensing insert assembly (40) for an ultrasonic endodontic dental apparatus including a handpiece (10) having an elongate hollow housing (12), and a coil (32) mounted in the housing and adapted to be connected to an energy source for establishing an alternating electromagnetic field within the housing, the housing having a cooling fluid inlet (18) at one end and being open at its other end, and the other end of the housing being adapted to removably receive the insert assembly, the assembly comprising an elongate hollow body (42) having one end adapted to be removably mounted in said other end of the housing with said one end of the hollow body in fluid communication with the interior of the housing whereby cooling fluid admitted into the housing can flow into the hollow body, a tool support assembly (80) telescopically received within the hollow body, the tool support assembly including an elongate shank (82) having vibratable means (106) rigidly mounted at one end thereof, the vibratable means projecting from said one end of the hollow body into a position in which it can be vibrated by the electromagnetic field when the hollow body is mounted in the housing, the other end of the shank projecting outwardly from the hollow body and terminating in mounting means (90) for supporting an endodontic instrument (96), characterised in that sealing means (68, 70) is provided between the hollow body and the shank, a cooling fluid outlet (78) is provided in the hollow body between the sealing means and said one end of the hollow body, the outlet providing a flow path for cooling fluid from the handpiece, the shank having a fluid flow passage (86) extending longitudinally therethrough from the mounting means and terminating at a location within the hollow body, and an irrigation fluid inlet (66) is provided for admitting irrigation fluid into the fluid flow passage to be discharged from said mounting means in a direction substantially parallel to an endodontic instrument mounted in the mounting means.

2. An assembly as claimed in claim 1, wherein the irrigation fluid inlet comprises a radially-extending bore (88) in the shank (82), and an inlet opening in the hollow body (42), the sealing means (68, 70) providing a sealed flow path between the inlet opening and the radially-extending bore.

3. An assembly as claimed in claim 2, wherein the sealing means comprises a pair of O-ring seals (68, 70) disposed one on each side of the inlet opening in the hollow body (42) and the radially-extending bore (88).

4. An assembly as claimed in any one of claims 1 to 3, wherein the tool support assembly (80) is provided with means (107) engageable with the hollow body (42) to prevent relative rotation therebetween.

5. An assembly as claimed in any one of claims 1 to 4, wherein the mounting means comprises an enlarged head (90) rigidly mounted on said other end of the shank (82), a first bore (92) extending through the head substantially in alignment with the fluid flow passage (86) in the shank, a second bore (94) extending into the head and intersecting the first bore, the second bore being adapted to receive the shank end of an endodontic instrument (96) and having a diameter larger than that of the endodontic instrument, and a threaded fastener for rigidly clamping the endodontic instrument in the second bore.

6. An assembly as claimed in claim 5, wherein the diameter of each of the first and second bores (92 and 94) in the head (90) is larger than that of the endodontic instrument (96) to be supported, whereby irrigation fluid can flow from the head axially along the endodontic instrument.

7. An assembly as claimed in any of claims 1 to 6, further comprising a conduit (110) connected to the outlet (78) for conducting cooling water from the handpiece (10).

8. Ultrasonic endodontic dental apparatus comprising a handpiece (10) having an elongate hollow housing (12), a coil (32) mounted in the housing and adapted to be connected to an external energy source for establishing an alternating electromagnetic field within the housing, the housing having a cooling fluid inlet (18) at one end and being open at the other end, and a dispensing insert assembly (40) removably mounted within said other end of the housing, the dispensing insert assembly comprising an elongate hollow body (42) having one end adapted to be removably mounted in said other end of the housing with said one end of the hollow body in fluid communication with the interior of the housing whereby cooling fluid admitted into the housing can flow into the hollow body, a tool support assembly (80) telescopically received within the hollow body, the tool support assembly including an elongate shank (82) having vibratable means (106) rigidly mounted at one end thereof, the vibrating means projecting from said one end of the hollow body into a position in which it can be vibrated by the electromagnetic field when the hollow body is mounted in the housing, the other end of the shank projecting outwardly from the hollow body and terminating in mounting means (90) for supporting an endodontic instrument (96), characterised in that sealing means (68, 70) is provided between the hollow body and the shank, a cooling fluid outlet (78) is provided in the hollow body between the sealing means and said one end of the hollow body, the outlet providing a flow path for cooling fluid from the handpiece, the shank having a fluid flow passage (86) extending longitudinally therethrough from the mounting means and terminating at a location within the hollow body, and an irrigation fluid inlet (66) is provided for admitting irrigation fluid into the fluid flow passage to be discharged from said mounting means in a direction substantially parallel to an endodontic instrument mounted in the mounting means.

9. Apparatus as claimed in claim 8, further comprising dispensing means (130) including a closed chamber (149) for containing irrigation fluid, a passage (108) connecting the closed chamber to the irrigation fluid inlet (66), a selectively-operable valve (132) in the passage for controlling the flow therethrough, and means (124) for directing pressurised air into the closed chamber to cause irrigation fluid contained therein to flow through the passage when the valve is open.

10. Apparatus as claimed in claim 9, wherein the closed chamber (149) is provided with bleed-off means (164) the bleed-off means being operable to control the air pressure in the closed chamber.

11. Apparatus as claimed in any one of claims 8 to 10, further comprising a multi-position, foot-activated switch (112) wherein, in a first, fully-raised (or unactuated) position, power to the coil (32) is off, and the flow of sealing fluid to the handpiece (10) and irrigation fluid from the dispensing means (130) are off; in a second, intermediate position, the coil is energised, cooling fluid is circulated through the handpiece, and the dispensing means is not actuated so that no irrigation fluid flows to the apparatus; and, in a third, fully-depressed position, power is supplied to the coil, cooling fluid is supplied to the handpiece, and the dispensing means is actuated to provide a controlled flow of irrigation fluid through the dispensing insert assembly (40) for discharge along the axis of the endodontic instrument (96).

## Patentansprüche

1. Einsetzbare Spendervorrichtung (40) für ein ultraschallbetriebenes endodontisches zahnärztliches Instrument mit einem Handstück (10) mit einem langgestreckten hohlen Gehäuse (12), und mit einer Spule (32), die in dem Gehäuse aufgenommen ist und an eine externe Energiequelle angeschlossen werden kann, um ein elektromagnetisches Wechselfeld innerhalb des Gehäuses aufzubauen, wobei das Gehäuse einen Einlaß (18) für Kühlflüssigkeit an einem Ende hat und zum anderen Ende hin offen ist, und wobei das andere Ende des Gehäuses geeignet ist, ein entfernbares Einsatzstück aufzunehmen, wobei die Vorrichtung einen langgestreckten Hohlkörper (42) aufweist, dessen eines Ende in dem genannten anderen Ende des Gehäuses lösbar befestigt werden kann, wobei dieses eine Ende des Hohlkörpers in Strömungsverbindung steht mit dem Inneren des Gehäuses und wobei Kühlflüssigkeit, die in das Gehäuse eintritt, in den Hohlkörper fließen kann, mit einer Instrumentenhaltevorrichtung (80), die teleskopartig von dem Hohlkörper aufgenommen wird, wobei die Instrumentenhaltevorrichtung einen langgestreckten Schaft (82) aufweist, der an seinem einen Ende ein dort starr besfestigtes Schwingungselement (106) aufweist, wobei das Schwingungselement von dem einen Ende des Hohlkörpers aus in eine solche Richtung ausgerichtet ist, daß es von dem elektromagnetischen Feld in Schwingungen versetzt werden kann, wenn der Hohlkörper in dem Gehäuse befestigt ist, wobei sich das andere Ende des Schafts vom Hohlkörper aus nach außen hin erstreckt und an seinem Ende Befestigungsmittel (90) aufweist, die das endodontische Instrument (96) halten, dadurch gekennzeichnet, daß zwischen dem Hohlkörper und dem Schaft Dichtungsmittel (68, 70) vorgesehen sind, daß ein Auslaß für Kühlflüssigkeit (78) im Hohlkörper vorgesehen ist zwischen den Dichtungsmitteln und dem einen Ende des Hohlkörpers, wobei der Auslaß einen Strömungsweg für die vom Handstück her ausströmende Kühlflüssigkeit schafft, wobei der Schaft einen Durchgang (86) für Flüssigkeit hat, der sich von den Befestigungsmitteln aus in Längsrichtung durch diesen erstreckt und an einer Stelle innerhalb des Hohlkörpers endet, und daß ein Einlaß (66) für Spülflüssigkeit vorgesehen ist, so daß diese in den Flüssigkeitsdurchgang gelangt, um von den Befestigungsmitteln aus im wesentlichen in paralleler Richtung zu einem in den Besfestigungsmitteln befestigten endodontischen Instrument auszuströmen.

2. Eine Vorrichtung nach Anspruch 1, dadurch gekennzeichnet, daß der Einlaß für Spülflüssigkeit eine sich radial erstreckende Bohrung (88) in dem Schaft (82) aufweist, und daß eine Einlaßöffnung in dem Hohlkörper (42) vorgesehen ist, wobei die Dichtungsmittel (68, 70) einen dichten Strömungsweg zwischen der Einlaßöffnung und der sich radial erstreckenden Bohrung schaffen.

3. Eine Vorrichtung gemäß Anspruch 2, dadurch gekennzeichnet, daß die Dichtungsmittel ein Paar O-Ring-Dichtungen (68, 70) sind, die jeweils an jeder Seite der Einlaßöffnung in dem Hohlkörper (42) und in der sich radial erstreckenden Bohrung (88) angeordnet sind.

4. Eine Vorrichtung gemäß einem der Ansprüche 1 bis 3, dadurch gekennzeichnet, daß die Instrumentenhaltevorrichtung (80) Mittel (107) aufweist, zur Verbindung mit dem Hohlkörper (42), die eine relative Rotation zwischen diesen verhindern.

5. Eine Vorrichtung gemäß den Ansprüchen 1 bis 4, dadurch gekennzeichnet, daß die Befestigungsmittel einen vergrößerten Kopf (90) aufweisen, der starr mit dem anderen Ende des Schafts (82) verbunden ist, wobei sich eine erste Bohrung (92) durch den Kopf erstreckt im wesentlichen fluchtend mit dem Flüssigkeitsdurchlaß (86) in dem Schaft, wobei sich eine zweite Bohrung (94) in dem Kopf erstreckt, die die erste Bohrung kreuzt, wobei die zweite Bohrung ausgebildet ist zur Aufnahme des Schaftendes eines endodontischen Instruments (96) und einen Durchmesser hat, der größer ist, als der des endodontischen Instruments, und wobei eine aufschraubbare Befestigungsvorrichtung zum sicheren Festklemmen des endodontischen Instruments in der zweiten Bohrung vorgesehen ist.

6. Eine Vorrichtung gemäß Anspruch 5, dadurch gekennzeichnet, daß der Durchmesser sowohl der ersten als auch der zweiten Bohrung (92, 94) in dem Kopf (90) größer ist, als der des endodontischen Instruments (96), das aufgenommen werden soll, wobei eine Spülflüssigkeit von dem Kopf achsial entlang des endodontisches Instruments fließen kann.

7. Eine Vorrichtung gemäß einem der Ansprüche 1 bis 6, die weiterhin eine Leitung (110) aufweist, die mit dem Auslaß (78) verbunden ist, um Kühlwasser zu dem Handstück (10) zu leiten.

8. Ein ultraschallbetätigtes endodontischen zahnärztliches Instrument mit einem Handstück (10) mit einem langgestreckten hohlen Gehäuse (12), einer in diesem Gehäuse angeordneten Spule (32), die geeignet ist, an eine externe Energiequelle zur Erzeugung eines elektromagnetischen Wechselfelds innerhalb des Gehäuses angeschlossen zu werden, wobei das Gehäuse einen Einlaß (18) an einem Ende für Kühlflüssigkeit hat und zum anderen Ende hin offen ist, und wobei eine einsetzbare Spendervorrichtung (40) herausnehmbar in dem anderen Ende des Gehäuses befestigt ist, wobei diese einsetzbare Spendervorrichtung einen langgestreckten Hohlkörper (42) aufweist, dessen eines Ende in dem genannten anderen Ende des Gehäuses lösbar befestigt werden kann, wobei dieses eine Ende des Hohlkörpers in Strömungsverbindung steht mit dem Inneren des Gehäuses und wobei Kühlflüssigkeit, die in daß Gehäuse eintritt, in den Hohlkörper fließen kann, mit einer Instrumentenhaltevorrichtung (80), die teleskopartig von dem Hohlkörper aufgenommen wird, wobei die Instrumentenhaltevorrichtung einen langgestreckten Schaft (82) aufweist, der an seinem einen Ende ein starr besfestigtes Schwingungselement (106) aufweist, wobei das Schwingungselement vom einen Ende des Hohlkörpers aus in eine solche Richtung ausgerichtet ist, daß es von dem elektromagnetischen Feld in Schwingungen versetzt werden kann, wenn der Hohlkörper in dem Gehäuse befestigt ist, wobei sich das andere Ende des Schafts vom Hohlkörper aus nach außen hin erstreckt und an seinem Ende Befestigungsmittel (90) für das endodontischen Instrument (96) aufweist, dadurch gekennzeichnet, daß zwischen dem Hohlkörper und dem Schaft Dichtungsmittel (68, 70) vorgesehen sind, daß ein Auslaß (78) für Kühlflüssigkeit im Hohlkörper vorgesehen ist zwischen den Dichtungsmitteln und dem einen Ende des Hohlkörpers, wobei der Auslaß einen Strömungsweg für Kühlflüssigkeit aus dem Handstück heraus ermöglicht, wobei der Schaft einen Durchgang (86) für Flüssigkeit hat, der sich von den Befestigungsmitteln aus in Längsrichtung durch diesen erstreckt und an einer Stelle innerhalb des Hohlkörpers endet, und daß ein Einlaß (66) für Spülflüssigkeit vorgesehen ist, so daß diese in den Flüssigkeitsdurchgang gelangt, um von den Befestigungsmitteln aus im wesentlichen in paralleler Richtung zu einem in den Befestigungsmitteln befestigten endodontischen Instrument auszuströmen.

9. Instrument gemäß Anspruch 8, dadurch gekennzeichnet, daß außerdem eine Verteilervorrichtung (130) vorgesehen ist, mit einer geschlossenen Kammer (149) zur Aufnahme der Spülflüssigkeit, mit einem Druchlaß (108) zur Verbindung der geschlossenen Kammer mit dem Einlaß (66) für die Spülflüssigkeit, mit einem selektiv betätigbaren Ventil (132) in dem Durchlaß zur Kontrolle des Stroms durch diesen und mit Mitteln (124) für die Zufuhr von Druckluft in die geschlossene Kammer, um die Spülflüssigkeit, die sich in dieser befindet, durch den Durchlaß fließen zu lassen, wenn das Ventil offen ist.

10. Instrument gemäß Anspruch 9, dadurch gekennzeichnet, daß die geschlossene Kammer mit Überströmmitteln (164) ausgestattet ist, die einstellbar sind, um den Luftdruck in der geschlossenen Kammer zu kontrollieren.

11. Instrument gemäß einem der Ansprüche 8 bis 10 dadurch gekennzeichnet, daß ein fußbetätigter Schalter (112) mit mehreren Stellungen vorgesehen ist, wobei in einer ersten obersten unbetätigten Position der Strom zu der Spule (32) abgeschaltet ist und der Strom von Kühlflüssigkeit zu dem Handstück (10) und der Strom der Spülflüssigkeit zu der Verteilervorrichtung unterbrochen sind, wobei in einer zweiten mittleren Position die Spule erregt ist, die Kühlflüssigkeit durch das Handstück fließt und die Verteilervorrichtung nicht betätgt wird, so daß keine Spülflüssigkeit zu dem Instrument fließen kann, und wobei in einer dritten ganz abgesenkten Position Strom zu der Spule geliefert wird, das Handstück mit Kühlflüssigkeit versorgt wird und die Verteilervorrichtung betätigt wird, so daß ein kontrollierter Strom an Spülflüssigkeit durch die einsetzbare Spendervorrichtung (40) fließt und entlang der Achse des endodontischen Instruments (96) ausströmt.

## Revendications

1. Dispositif distributeur intégré (40) équipant un appareil dentaire endodontique à ultrasons présentant une poignée (10) qui est munie d'un boîtier creux allongé (12) et d'un enroulement (32) logé dans ce boîtier et destiné à être raccordé à une source d'énergie extérieure pour établir un champ magnétique alternatif à l'intérieur dudit boîtier, ce boîtier comportant une admission (18) de fluide de refroidissement à l'une de ses extrémités et étant ouvert à son autre extrémité, l'autre extrémité de ce boîtier étant conçue pour recevoir amoviblement le dispositif intégré, ce dispositif comprenant un corps creux allongé (42) dont l'une des extrémités est destinée à être montée amoviblement dans ladite autre extrémité du boîtier, l'extrémité précitée du corps creux étant en communication par fluide avec l'intéterieur du boîtier de telle sorte qu'un fluide de refroidissement admis dans ce boîtier puisse affluer dans le corps creux, un dispositif (80) porte-instrument logé télescopiquement dans le corps creux, ce dispositif porte-instrument possédant un fût allongé (82) muni d'un moyen vibrant (106) monté rigidement à l'une des ses extrémités, ce moyen vibrant faisant saillie, a partir de l'extrémité précitée du corps creux, à une position dans laquelle une vibration peut lui être imposée par le champ électromagnétique lorsque le corps creux est monté dans le boîtier, l'autre extrémité du fût dépassant vers l'extérieur au-delà du corps creux et s'achevant par un moyen de montage (90) pour supporter un instrument endodontique (96), caractérisé par le fait que des moyens d'étanchement (68, 70) sont prévus entre le corps creux et le fût; une sortie (78) de fluide de refroidissement est ménagée dans le corps creux entre les moyens d'étanchement et l'extrémité précitée du corps creux, cette sortie formant un trajet d'écoulement du fluide de refroidissement à partir de la poignée, le fût présentant un passage (86) de circulation du fluide, qui le parcourt longitudinalement à partir du moyen de montage et s'achève à un emplacement situé à l'intérieur du corps creux; et une admission (66) de fluide d'irrigation est prévue pour admettre, dans le passage de circulation du fluide, un fluide d'irrigation devant être déchargé à partir dudit moyen de montage, dans une direction sensiblement parallèle à un instrument endodontique monté dans ledit moyen de montage.

2. Dispositif selon la revendication 1, dans lequel l'admission d'un fluide d'irrigation se compose d'un perçage (88) s'étendant radialement dans le fût (82) et d'un orifice d'admission débouchant dans le corps creux (42), les moyens d'étanchement (68, 70) conférant un trajet d'écoulement étanche entre l'orifice d'admission et le perçage s'étendant radialement.

3. Dispositif selon la revendication 2, dans lequel les moyens d'étanchement consistent en une paire de bagues toriques d'étanchement (68, 70), dont chacune est disposée d'un côté de l'orifice d'admission débouchant dans le corps creux (42), et du perçage (88) s'étendant radialement.

4. Dispositif selon l'une quelconque des revendications 1 à 3, dans lequel le dispositif (80) porte-instrument est doté d'un moyen (107) pouvant venir en prise avec le corps creux (42), afin d'empêcher une rotation relative de ces derniers.

5. Dispositif selon l'une quelconque des revendications 1 à 4, dans le moyen de montage comprend une tête élargie (90) montée rigidement sur ladite autre extrémité du fût (82), un premier perçage (92) traversant la tête sensiblement dans l'alignement du passage (86) de circulation d'un fluide dans le fût, un second perçage (94) pénétrant dans la tête et coupant le premier perçage, ce second perçage étant destiné à recevoir l'extrémité de la tige d'un instrument endodontique (96) et accusant un diamètre plus fort que celui de l'instrument endodontique, anisi qu'un organe de fixation fileté pour serrer rigidement l'instrument endodontique dans le second perçage.

6. Dispositif selon la revendication 5, dans lequel le diamètre de chacun des premier et second perçages (92 et 94), dans la tête (90), et plus grand que celui de l'instrument endodontique (96) devant être supporté, de sorte qu'un fluide d'irrigation peut s'écouler axialement le long de l'instrument endodontique, à partir de la tête.

7. Dispositif selon l'une quelconque des revendications 1 à 6, présentant en outre un conduit (110) raccordé à la sortie (78) de manière à acheminer de l'eau de refroidissement à partir de la poignée (10).

8. Appareil dentaire endodontique à ultrasons présentant une poignée (10) munie d'un boîtier creux allongé (12), un enroulement (32) logé dans ce boîtier et destiné à être raccordé à une source d'énergie extérieure pour établir un champ magnétique alternatif à l'intérieur dudit boîtier, ce boîtier comportant une admission (18) de fluide de refroidissement à l'une de ses extrémités et étant ouvert à son autre extrémités, ainsi qu'un dispositif distributeur intégré (40) monté amoviblement dans ladite autre extrémité du boîtier, ce dispositif intégré comprenant un corps creux allongé (42) dont l'une des extrémités est destinée à être montée amoviblement dans ladite autre extrémité du boîtier, l'extrémité précitée du corps creux étant en communication par fluide avec l'intérieur du boîtier de telle sorte qu'un fluide de refroidissement admis dans ce boîtier puisse affluer dans le corps creux, un dispositif (80) porte-instrument logé télescopiquement dans le corps creux, ce dispositif porte-instrument possédant un fût allongé (82) muni d'un moyen vibrant (106) monté rigidement à l'une de ses extrémités, ce moyen vibrant faisant saillie, à partir de l'extrémité précitée du corps creux, à une position dans laquelle une vibration peut lui être imposée par le champ électromagnétique lorsque le corps creux est monté dans la boîtier, l'autre extrémité du fût dépassant vers l'extérieur au-delà du corps creux et s'achevant par un moyen de montage (90) pour supporter un instrument endodontique (96), caractérisé par le fait que des moyens d'étanchement (68, 70) sont prévus entre le corps creux et le fût; une sortie (78) de fluide de refroidissement est ménagée dans le corps creux entre les moyens d'étanchement et l'extrémité précitée du corps creux, cette sortie formant un trajet d'écoulement du fluide de refroidissement à partir de la poignée, le fût présentant un passage (86) de circulation du fluide, qui le parcourt longitudinalement à partir du moyen de montage et s'achève à un emplacement situé à l'intérieur du corps creux; et une admission (66) de fluide d'irrigation est prévue pour admettre, dans le passage de circulation du fluide, un fluide d'irrigation devant être déchargé à partir dudit moyen de montage, dans une direction sensiblement parallèle à un instrument endodontique monté dans ledit moyen de montage.

9. Appareil selon la revendication 8, présentant par ailleurs un moyen dispensateur (130) comprenant une chambre fermée (149) pour contenir un fluide d'irrigation, un passage (108) reliant la chambre fermée à l'admission (66) de fluide d'irrigation, une valve (132) actionnable sélectivement, située dans ledit passage pour commander le flux qui le parcourt, ainsi qu'un moyen (124) pour diriger de l'air comprimé dans la chambre fermée, de manière que du fluide d'irrigation renfermé par cette chambre s'écouler par le passage lorsque la valve est ouverte.

10. Appareil selon la revendication 9, dans lequel la chambre fermée (149) est pourvue d'un dispositif d'évent (164), ce dispositif d'évent ayant pour effet de commander la pression de l'air dans la chambre fermée.

11. Appareil selon l'une quelconque des revendications 8 à 10, présentant par ailleurs un commutateur multipositions (112) actionné au pied et grâce auquel, dans une première position intégralement soulevée (ou de non-actionnement), la puissance déliverée à l'enroulement (32) est supprimée et les circulations de fluide de refroidissement vers la poignée (10) et du fluide d'irrigation à partir du moyen dispensateur (130) sont interrompues; dans une deuxième position, ou position intermédiaire, l'enroulement est excité, la circulation du fluide de refroidissement est établie dans la poignée et le moyen dispensateur n'est pas actionée, si bien qu'aucun fluide d'irrigation ne s'écoule vers l'appareil; et, dans une troisième position d'enfoncement total, une puissance est fournie à l'enroulement, du fluide de refroidissement est délivré à la poignée et le moyen dispensateur est actionné de manière à provoquer, à travers le dispositif distributeur intégré (40), un flux commandé de fluide d'irrigation devant être déchargé le long de l'axe de l'instrument endodontique (96).

FIG. 1.

0 125 784

## FIG. 2.

FIG. 3.